(19) Europäisches Patentamt / European Patent Office / Office européen des brevets

(11) **EP 4 442 411 A1**

(12) **EUROPEAN PATENT APPLICATION**
published in accordance with Art. 153(4) EPC

(43) Date of publication:
**09.10.2024 Bulletin 2024/41**

(21) Application number: **22898710.3**

(22) Date of filing: **29.11.2022**

(51) International Patent Classification (IPC):
**B25J 13/08** (2006.01)　　　**B25J 15/08** (2006.01)

(52) Cooperative Patent Classification (CPC):
**B25J 13/08; B25J 15/08**

(86) International application number:
**PCT/JP2022/044048**

(87) International publication number:
**WO 2023/095928 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2021 JP 2021193651**

(71) Applicant: **Kyocera Corporation**
**Kyoto-shi, Kyoto 612-8501 (JP)**

(72) Inventors:
• YAMAGISHI, Yuki
 **Kyoto-shi, Kyoto 612-8501 (JP)**
• ONO, Kazuki
 **Kyoto-shi, Kyoto 612-8501 (JP)**
• ANAN, Naohiro
 **Kyoto-shi, Kyoto 612-8501 (JP)**
• ISHIDA, Takayuki
 **Kyoto-shi, Kyoto 612-8501 (JP)**
• MIYAMURA, Hiroaki
 **Kyoto-shi, Kyoto 612-8501 (JP)**

(74) Representative: **TBK**
**Bavariaring 4-6**
**80336 München (DE)**

(54) **CONTROL DEVICE, ROBOT CONTROL SYSTEM, AND ROBOT CONTROL METHOD**

(57)　A control apparatus includes a hand controller that controls a hand capable of grasping an object to be grasped and including a first finger and a second finger. The hand controller obtains, from at least one sensor linked to the first finger and the second finger, a plurality of pieces of force information indicating force acting on the first finger and the second finger from the object to be grasped. The hand controller determines, on a basis of a relationship between the plurality of pieces of force information, whether contact areas of the first finger and the second finger in contact with the object to be grasped are appropriate.

FIG. 1

EP 4 442 411 A1

**Description**

CROSS-REFERENCE TO RELATED APPLICATIONS

The present application claims priority to Japanese Patent Application No. 2021-193651 filed in the Japan Patent Office on November, 29, 2021, the entire contents of which are incorporated herein by reference.

TECHNICAL FIELD

The present disclosure relates to a control apparatus, a robot control system, and a method for controlling a robot.

BACKGROUND OF INVENTION

A method for controlling a robot capable of stably grasping an object of an unknown shape independently of the shape of the object without taking time to grasp the object is known (e.g., refer to Patent Literature 1).

CITATION LIST

PATENT LITERATURE

Patent Literature 1: Japanese Unexamined Patent Application Publication No. 2003-245883

SUMMARY

In an embodiment of the present disclosure, a control apparatus includes a hand controller that controls a hand capable of grasping an object to be grasped and including a first finger and a second finger. The hand controller obtains, from at least one sensor linked to the first finger and the second finger, a plurality of pieces of force information indicating force acting on the first finger and the second finger from the object to be grasped. The hand controller determines, on a basis of a relationship between the plurality of pieces of force information, whether contact areas of the first finger and the second finger in contact with the object to be grasped are appropriate.
In an embodiment of the present disclosure, a robot control system includes the control apparatus and a robot including a hand.
In an embodiment of the present disclosure, a method for controlling a robot is performed by a control apparatus that controls a hand capable of grasping an object to be grasped and including a first finger and a second finger. The method for controlling a robot includes obtaining, from at least one sensor linked to the first finger and the second finger using the control apparatus, a plurality of pieces of force information indicating force acting on the first finger and the second finger from the object to be grasped. The method for controlling a robot includes determining, on a basis of a relationship between the plurality of pieces of force information using the control apparatus, whether contact areas of the first finger and the second finger in contact with the object to be grasped are appropriate.

BRIEF DESCRIPTION OF THE DRAWINGS

FIG. 1 is a block diagram illustrating a configuration example of a robot control system according to an embodiment.
FIG. 2 is a block diagram illustrating a configuration example of a hand controller and a hand.
FIG. 3 is a schematic diagram illustrating an example of a mode in which the hand grasps an object to be grasped.
FIG. 4A is a schematic diagram illustrating an example where the center of the object to be grasped and the centers of fingers match.
FIG. 4B is a schematic diagram illustrating an example where the object to be grasped is located closer to one of the fingers.
FIG. 4C is a schematic diagram illustrating an example where the object to be grasped is located closer to one of the fingers and deviates from the centers of the fingers.
FIG. 5 is an example of a two-dimensional graph on which relationships between outputs of contact force sensors for the fingers are plotted.
FIG. 6 is a graph illustrating an example of a relationship between the outputs of the contact force sensors for the fingers and a rotation angle of a motor in a contact state illustrated in FIG. 4B.
FIG. 7 is a graph illustrating an example of a relationship between the outputs of the contact force sensors for the fingers and the rotation angle of the motor in a contact state illustrated in FIG. 4C.

FIG. 8 is a flowchart illustrating an example of a procedure of a method for controlling a robot according to the embodiment.

DESCRIPTION OF EMBODIMENTS

When control of grasping is switched before and after contact with an object, the grasping might become unstable in discontinuous ranges of the control. Improvement in stability of grasping is required.

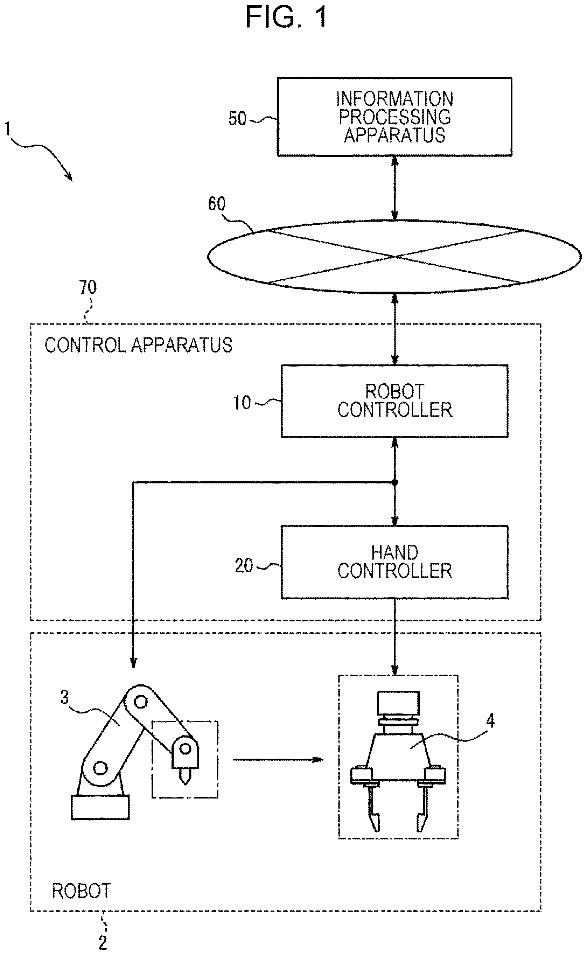

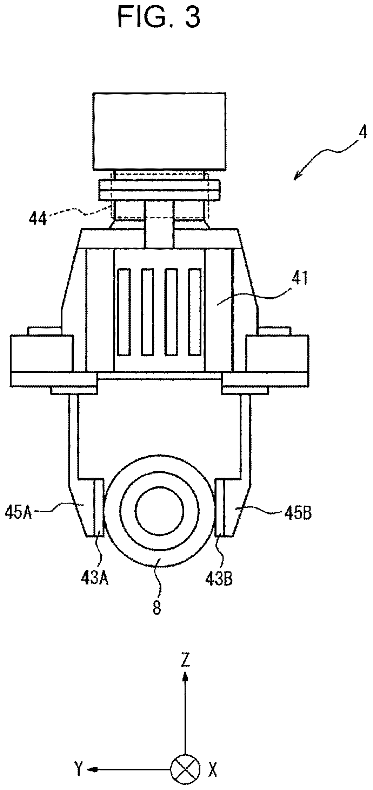

In an embodiment, a robot control system 1 includes a robot 2 and a control apparatus 70. The robot 2 includes an arm 3 and a hand 4 as illustrated in FIG. 1. The arm 3 may include joints and links. The hand 4 is configured to be able to grasp an object 8 to be grasped (refer to FIG. 3). In the present embodiment, the control apparatus 70 includes a robot controller 10 and a hand controller 20. The control apparatus 70 may include at least the hand controller 20. The robot controller 10 moves the hand 4 to a position of the object 8 to be grasped by operating the arm 3 of the robot 2 on the basis of information for controlling movement of the robot 2. The movement of the hand 4 to the position of the object 8 to be grasped will also be referred to as an approach operation. The robot controller 10 controls the approach operation of the hand 4 to the object 8 to be grasped. The hand controller 20 controls the hand 4 to cause the hand 4 to grasp the object 8 to be grasped.

The robot controller 10 and the hand controller 20 may perform, for example, an operation described hereinafter. The robot controller 10 controls the arm 3 such that the hand 4 moves to a position where the hand 4 can grasp the object 8 to be grasped. After the hand 4 moves to the object 8 to be grasped, the hand controller 20 determines a target position where the hand 4 grasps the object 8 to be grasped, and controls the hand 4 such that the hand 4 grasps the object 8 to be grasped. While the hand 4 is grasping the object 8 to be grasped, the robot controller 10 controls the arm 3 in such a way as to raise the hand 4 to lift the object 8 to be grasped and move the object 8 to be grasped to a target position to which the object 8 to be grasped is to be moved. After the lifted object 8 to be grasped moves to the target position, the hand controller 20 reduces grasping force for the object 8 to be grasped to release the object 8 to be grasped from the hand 4 and put the object 8 to be grasped at the target position.

The robot controller 10 may generate and obtain information for controlling movement of the robot 2. The robot controller 10 may obtain information for controlling movement of the robot 2 from an external apparatus such as an information processing apparatus 50 linked over a network 60 or without the network 60, instead. The hand controller 20 may generate and obtain information for controlling movement of the hand 4. The hand controller 20 may obtain information for controlling movement of the hand 4 from the robot controller 10, instead. The robot controller 10 and the hand controller 20 may be integrated together.

The robot controller 10 may include at least one processor in order to provide control and processing performance for executing various functions. The processor can execute programs for achieving various functions of the robot controller 10. The processor may be achieved as a single integrated circuit. The integrated circuit is also called an IC (integrated circuit). The processor may be achieved as a plurality of integrated circuits and discrete circuits communicably connected to one another, instead. The processor may be achieved on the basis of one of various other known techniques, instead.

The robot controller 10 may include a storage unit. The storage unit may include a magnetic storage medium such as a magnetic disk or a memory such as a semiconductor memory or a magnetic memory. The storage unit stores various pieces of information, programs to be executed by the robot controller 10, and the like. The storage unit may function as a working memory of the robot controller 10. At least a part of the storage unit may be achieved separately from the robot controller 10.

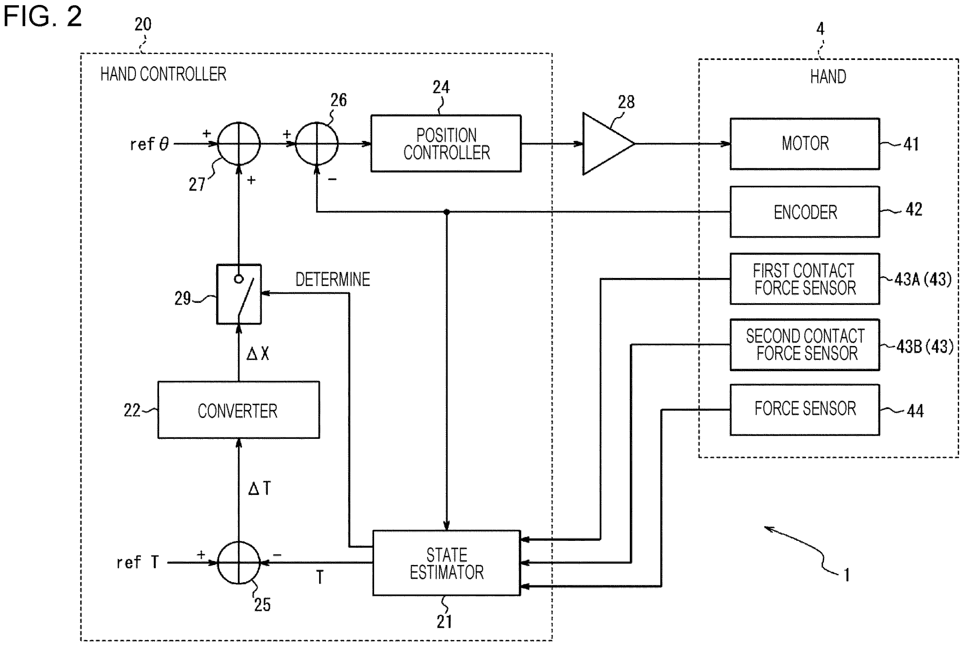

As illustrated in FIG. 2, the hand controller 20 includes a state estimator 21, a converter 22, a position controller 24, adders 25, 26, and 27, and a switch 29. The hand controller 20 may include at least one processor. The hand controller 20 may include a storage unit. Although operation of each component will be described later, the operation will be briefly described hereinafter. The state estimator 21 estimates a grasping state in which the hand 4 is grasping the object 8 to be grasped. The converter 22 converts signals. The converter 22 is capable of converting grasping force information into positional information. The position controller 24 outputs a control signal for controlling a position of the hand 4. The adders 25, 26, and 27 add or subtract signals. The switch 29 switches opening and closing of an output path for signals.

The robot controller 10 obtains image information from a camera or the like connected to the robot controller 10 and performs image processing or the like for controlling the arm 3 of the robot 2 or recognizing the object 8 to be grasped. The hand controller 20 controls the hand 4, for example, in such a way as to grasp the recognized object 8 to be grasped. An computational load of the robot controller 10 and an computational load of the hand controller 20 are different from each other. The robot controller 10 and the hand controller 20 may be separately provided. The robot controller 10 may be implemented as a computer installed in a body of the robot 2 or under the arm 3. The hand controller 20 may be implemented as a processor, such as a CPU, incorporated into the hand 4. The hand controller 20 may be implemented in the same manner as or similarly to the robot controller 10.

The hand 4 includes a motor 41, an encoder 42, a first contact force sensor 43A, a second contact force sensor 43B, and a force sensor 44. The contact force sensor 43A and the second contact force sensor 43B will be collectively referred to as contact force sensors 43. The motor 41 is implemented as, for example, a servomotor such as a stepping motor and controls a rotation angle on the basis of a control signal. The encoder 42 detects the rotation angle of the motor 41 and outputs the rotation angle to the hand controller 20. The encoder 42 detects a position or an attitude, speed or acceleration, or the like of the arm 3 or the hand 4 of the robot 2. The hand 4 may further include a motion sensor. The motion sensor may be installed at one of the joints of the arm 3 of the robot 2.

The encoder 42, the contact force sensors 43, and the force sensor 44 will also be simply referred to as sensors. The hand 4 includes a plurality of sensors. The contact force sensors 43 and the force sensor 44 will be described later.

As illustrated in FIG. 3, the hand 4 includes two fingers 45A and 45B. The hand 4 drives the motor 41 to adjust a distance between the two fingers 45A and 45B and grasp the object 8 to be grasped with the two fingers 45A and 45B. While grasping the object 8 to be grasped, the hand 4 lifts the object 8 to be grasped in a Z-axis direction by moving the object 8 to be grasped in a positive direction of a Z-axis. In FIG. 3, a negative direction of the Z-axis corresponds to a direction in which gravity acts on the object 8 to be grasped. The direction in which gravity acts on the object 8 to be grasped is also called a vertical direction.

The finger 45A includes one or a plurality of contact force sensors 43A at a part at which the finger 45A comes into contact with the object 8 to be grasped. The finger 45B includes one or more contact force sensors 43B at a part at which the finger 45B comes into contact with the object 8 to be grasped. The first and second contact force sensors 43A and 43B detect force acting on the fingers 45A and 45B from the object 8 to be grasped at a time when the fingers 45A and 45B grasp the object 8 to be grasped. The force acting on the fingers 45A and 45B from the object 8 to be grasped will also be referred to as contact force. Information regarding contact force detected by the first and second contact sensors 43A and 43B will also be referred to as force information. The finger 45A will also be referred to as a first finger. The finger 45B will also be referred to as a second finger.

The first and second contact force sensors 43A and 43B may be implemented as piezoelectric sensors, strain gauges, or the like. The first and second contact force sensors 43A and 43B may each be configured to be able to detect force in directions along a plurality of axes. The first and second contact force sensors 43A and 43B may each include a plurality of sensors corresponding to force in the plurality of directions. Force information may be obtained on the basis of not only results of detection by the first and second contact force sensors 43A and 43B but also a result of detection by a current sensor that detects a current flowing to the motor for driving the robot 2.

The hand 4 includes one or more force sensor 44 between a base part supporting the two fingers 45A and 45B and the arm 3 of the robot 2. The force sensor 44 detects force or torque acting on the base part through the two fingers 45A and 45B. The force sensor 44 detects force in the negative direction of the Z-axis, that is, gravitational force acting on the object 8 to be grasped and the hand 4. The force sensor 44 may be implemented as a piezoelectric sensor, a strain gauge, or the like. The force sensor 44 may include a plurality of sensors corresponding to force or torque in a plurality of directions. The force sensor 44 may be provided for not only the hand 4 but also the arm 3 of the robot 2 or the like. The force information includes information regarding force or torque detected by the force sensor 44.

Since the first and second contact force sensors 43A and 43B detect force acting on the fingers 45A and 45B, respectively, the first and second contact force sensors 43A and 43B can be regarded as operating in conjunction with the fingers 45A and 45B. Since the force sensor 44 detects force or torque acting on the base part of the hand 4 supporting the fingers 45A and 45B, the force sensor 44 can be regarded as operating in conjunction with the fingers 45A and 45B.

The hand controller 20 may obtain information indicating the position of the hand 4 on the basis of information from at least one of a plurality of sensors including the encoder 42, the contact force sensors 43, the force sensor 44, or the like. The information indicating the position of the hand 4 will also be referred to as positional information regarding the hand 4. The positional information regarding the hand 4 may include information regarding a position at which the hand 4 grasps the object 8 to be grasped.

When the robot controller 10 causes the hand 4 of the robot 2 to grasp the object 8 to be grasped, the hand controller 20 may control the hand 4 in a manner that will be described hereinafter.

The hand controller 20 outputs a control signal for controlling the rotation angle of the motor 41 of the hand 4 to the motor 41 from the position controller 24. The hand controller 20 outputs, from the position controller 24 to the motor 41 of the hand 4 as the control signal, information for controlling force with which the fingers 45A and 45B grasp the object 8 to be grasped. The hand controller 20 outputs the control signal through a driver 28 that amplifies the signal for the hand 4. The driver 28 outputs a voltage for operating (actuating) the motor 41.

The motor 41 controls the rotation angle on the basis of the control signal. The encoder 42 detects the rotation angle of the motor 41 and outputs the rotation angle to the state estimator 21 and the adder 26 of the hand controller 20. A control loop where a control signal for controlling the rotation angle is output to the motor 41 and a result of detection of the rotation angle of the motor 41 is fed back is also called an inner control loop, and functions as a simple position control loop when outputs of the contact force sensors 43 are not used.

The motor 41 controls force for moving the fingers 45A and 45B on the basis of information, included in a control signal, for controlling force with which the object 8 to be grasped is grasped. The first contact force sensor 43A detects contact force at a time when the finger 45A comes into contact with the object 8 to be grasped and outputs the contact force to the state estimator 21 of the hand controller 20. The second contact force sensor 43B detects contact force at a time when the finger 45B comes into contact with the object 8 to be grasped and outputs the contact force to the state estimator 21 of the hand controller 20.

The state estimator 21 calculates force with which the fingers 45A and 45B grasp the object 8 to be grasped on the basis of contact force detected by the first and second contact force sensors 43A and 43B. The force with which the object 8 to be grasped is grasped will also be referred to as grasping force. The state estimator 21 outputs a calculated grasping force T to the adder 25. The adder 25 outputs a value $\Delta T$ obtained by subtracting the calculated grasping force T from a reference grasping force refT to the converter 22. $\Delta T$ indicates an upper and lower limit setting range from the reference grasping force refT. The reference grasping force refT may be defined for each of objects 8 to be grasped. The reference grasping force refT may be, for example, set by a user for each object 8 to be grasped. The reference grasping force refT may be, for example, set for each object 8 to be grasped and held in a storage unit or read from the storage unit in accordance with the object 8 to be grasped. In this case, the robot control system 1 may include an input unit that receives user inputs, such as a keyboard, a pointer, or a touch panel.

The converter 22 converts $\Delta T$ into $\Delta X$ and outputs $\Delta X$ to the switch 29. More specifically, the converter 22 is capable of converting a sensor output indicating the grasping force T, for example, into a rotation angle $\theta$ of the motor 41 of the hand 4. The converter 22 may convert $\Delta T$ into $\Delta X$ through, for example, table information stored in a storage unit and indicating a relationship between the sensor output and the rotation angle $\theta$. The storage unit may be, for example, a nonvolatile memory. In this case, the storage unit can hold a table for converting grasping force information into positional information at a time of, for example, an initial operation, shipment, or maintenance. The storage unit is not limited to that of the robot controller 10 or the hand controller 20, and may be one connected to the robot controller 10 or the hand controller 20 over the network, instead. In this case, the converter 22 may, for example, separately obtain identification information and then obtain the conversion table stored in the storage unit on the basis of the identification information. The identification information may be, for example, a QR code, a barcode, or the like given to a surface of the robot 2, or may be recognition information, such as an address of the conversion table, obtained from the camera or the like connected to the robot controller 10.

$\Delta X$ indicates a value by which the rotation angle of the motor 41 deviates from a control target. The converter 22 may output $\Delta X$ to the switch 29 through a filter. The filter may include, for example, a low-pass filter that cuts off a high-frequency component for the sake of stability of a control system. When the switch 29 is closed, the output of the converter 22 is input to the adder 27. The adder 27 adds $\Delta X$ and ref$\theta$ and outputs the sum to the adder 26. The sum of $\Delta X$ and ref$\theta$ indicates a control target value of the rotation angle of the motor 41 when the grasping force is taken into consideration. The adder 26 outputs, to the position controller 24, a value obtained by subtracting a result of detection of the rotation angle of the motor 41 output from the encoder 42 from the control target value of the rotation angle of the motor 41 at a time when the grasping force output from the adder 27 is taken into consideration. The position controller 24 controls the motor 41 on the basis of a signal input from the adder 26. More specifically, the position controller 24 controls the motor 41 such that the rotation angle of the motor 41 becomes close to the control target value (ref$\theta$) on the basis of the result of the detection of the rotation angle of the motor 41 obtained from the encoder 42 and the control target value. By repeating this control, the grasping force of the hand 4 becomes close to the control target value refT). ref$\theta$ may be, for example, a value obtained by converting refT into a rotation angle.

A control loop where the grasping force is output to the motor 41 and fed back will also be referred to as an outer control loop and functions as a force (grasping force) control loop that uses the outputs of the contact force sensors 43.

The hand controller 20 can switch, by opening and closing the switch 29, between a state in which the outer control loop functions and a state in which the outer control loop does not function. More specifically, the hand controller 20 can switch, by closing the switch 29 and feeding back $\Delta X$ to the position controller 24, to the state in which the outer control loop functions. The hand controller 20 can switch, by opening the switch 29 and feeding back only ref$\theta$ without feeding back $\Delta X$ to the position controller 24, the state in which the outer control loop does not function. The state estimator 21 outputs a signal for controlling opening and closing the switch 29 on the basis of the result of the detection of the rotation angle of the motor 41 obtained from the encoder 42 and the results of the detection of the grasping force obtained from the contact force sensors 43.

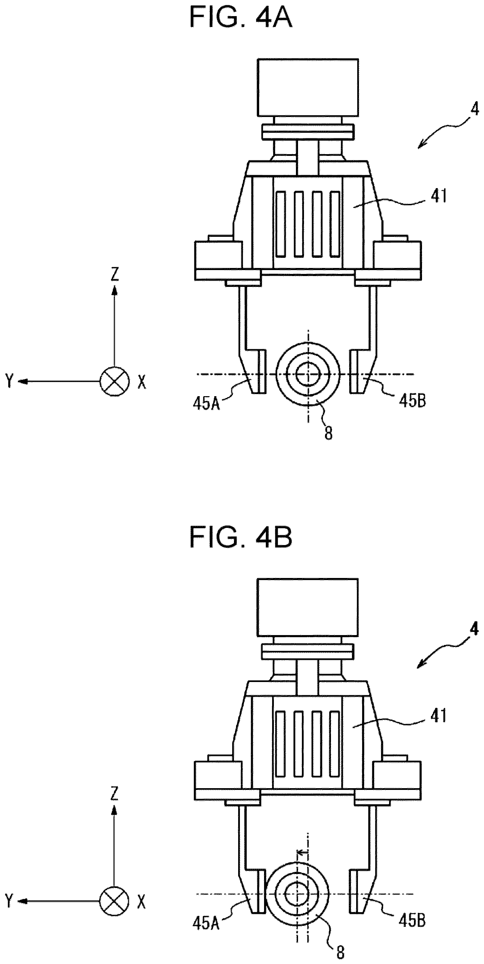

The state estimator 21 determines whether to cause the outer control loop, where the grasping force is fed back on the basis of the grasping state established by the fingers 45A and 45B, to function. In other words, the state estimator 21 can determine whether to feed back the grasping force on the basis of whether the grasping state is stable. When the center (an intersection between a dash-dot line in the Z-axis direction and a dash-dot line in the Y-axis direction) of the object 8 to be grasped is located at a midpoint between the fingers 45A and 45B in both the Z-axis direction and the Y-axis direction as illustrated in FIG. 4A, for example, the contact force from the fingers 45A and 45B becomes even and can be stably detected. Since the contact force is stably detected, the grasping by the fingers 45A and 45B is stably controlled on the basis of the grasping force. In this case, the grasping state can be regarded as stable.

When, for example, the center (the intersection between the dash-dot line in the Z-axis direction and the dash-dot line in the Y-axis direction) of the object 8 to be grasped is located at the midpoint between the fingers 45A and 45B in the Z-axis direction but closer to the finger 45A or 45B in the Y-axis direction as illustrated in Fig. 4B, on the other hand, the object 8 to be grasped comes into contact with one of the fingers 45A and 45B first and, after coming into contact with one of the fingers 45A and 45B, moves in the Y-axis and comes into contact with the other finger 45A or 45B. In this case, the contact force of the fingers 45A and 45B can greatly vary. As a result, the contact force of the fingers 45A and 45B is not stably detected. Since the contact force is not stably detected, the control of grasping based on the grasping force becomes unstable. In this case, the grasping state can be regarded as unstable.

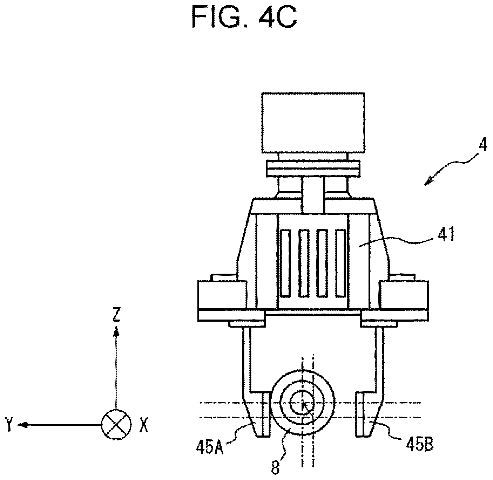

When, for example, the center (the intersection between the dash-dot line in the Z-axis direction and the dash-dot line in the Y-axis direction) of the object 8 to be grasped deviates from the midpoint between the fingers 45A and 45B in the Z-axis direction and is closer to the finger 45A or 45B in the Y-axis direction as illustrated in Fig. 4C, the output of at least one of the first contact force sensor 43A and the second contact force sensor 43B becomes small since the object 8 to be grasped deviates from the midpoint between the fingers 45A and 45B. Since the output of at least one of the first and second contact sensor 43A and 43B becomes small, the control of grasping based on the grasping force becomes unstable. In this case, the grasping state can be regarded as unstable.

If the control of grasping based on the grasping force is stable, the state estimator 21 may determine that areas at which the fingers 45A and 45B are in contact with the object 8 to be grasped are appropriate. If the control of grasping based on the grasping force is unstable, on the other hand, the state estimator 21 may determine that areas at which the fingers 45A and 45B are in contact with the object 8 to be grasped are not appropriate. That is, the hand controller 20 may determine, with the state estimator 21, whether the grasping state of the object 8 to be grasped is stable. More specifically, the hand controller 20 may determine, with the state estimator 21, whether contact areas of the fingers 45A and 45B with the object 8 to be grasped are appropriate. The hand controller 20 may determine, with the state estimator 21, whether the contact areas of the fingers 45A and 45B are appropriate on the basis of a plurality of pieces of force information. The hand controller 20 may determine, with the state estimator 21, whether the contact areas are appropriate on the basis of a plurality of pieces of force information from a plurality of first contact sensors 43A or a plurality of second contact sensors 43B. The hand controller 20 may determine, with the state estimator 21, whether the contact areas are appropriate on the basis of a plurality of pieces of force information from at least one force sensor 44.

The hand controller 20 may estimate, with the state estimator 21, contact positions and contact angles of the object 8 to be grasped in contact with the fingers 45A and 45B on the basis of a plurality of pieces of force information. The hand controller 20 may determine, with the state estimator 21, whether the contact areas are appropriate on the basis of the contact positions and the contact angles of the object 8 to be grasped in contact with the fingers 45A and 45B.

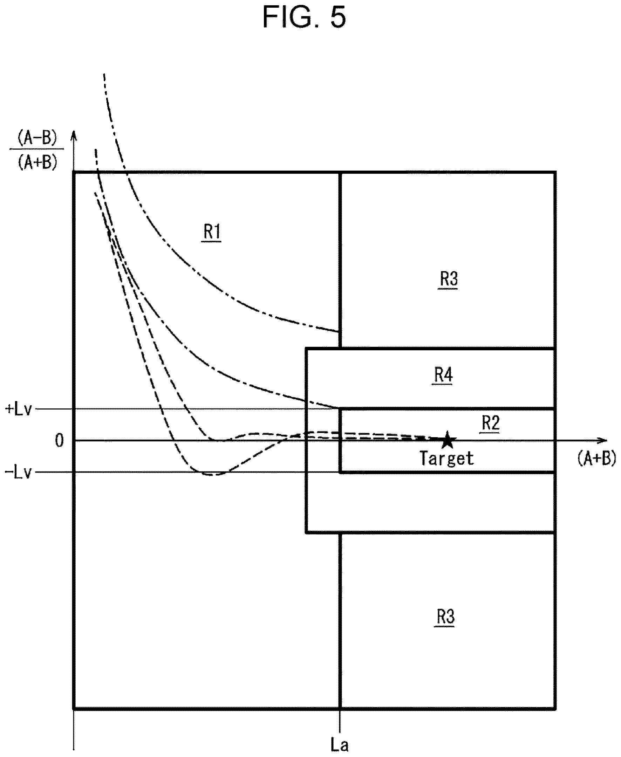

The outputs of the contact force sensors 43 can be represented by an example of a two-dimensional graph of FIG. 5. In the graph of FIG. 5, a horizontal axis represents the sum (A + B) of the output (A) of the first contact force sensor 43A and the output (B) of the second contact force sensor 43B. A vertical axis represents a ratio ((A - B)/(A + B)) of a difference (A - B) between the output (A) of the first contact force sensor 43A and the output (B) of the second contact force sensor 43B to the sum (A + B).

A point on the graph of FIG. 5 represents the grasping state, by the fingers 45A and 45B, of the object 8 to be grasped. When the fingers 45A and 45B start to grasp the object 8 to be grasped, the point moves in a direction in which a value of (A + B) increases. As the object 8 to be grasped approaches to the midpoint between the fingers 45A and 45B, a value of |A - B| decreases. In a normal grasping state, the value of |A - B| becomes closer to zero as the value of (A + B) increases. As indicated by broken lines in FIG. 5, the point indicating the grasping state moves closer to the horizontal axis (a line of (A - B) = 0) from an area (left) where the value of (A+ B) is small to an area (right) where the value is large. The normal grasping state corresponds to a state in which both the fingers 45A and 45B are in contact with the object 8 to be grasped.

The graph of FIG. 5 is divided into a plurality of areas. An area of (A + B) ≤ La is denoted by R1. When the point indicating the grasping state is located in the area denoted by R1, a central axis of the object 8 to be grasped is deviating from the contact force sensors 43, output values of the contact force sensors 43 have decreased due to contact and grasping, or only one of the contact force sensors 43 is in contact with the object 8 to be grasped. An area of (A + B) > La and |A- B|/(A + B) < Lv (i.e., (A - B)/(A + B) < +Lv and (A - B)/(A + B) > - Lv) is denoted by R2. When the point indicating the grasping state is located in the area denoted by R2, the fingers 45A and 45B are appropriately in contact with the object 8 to be grasped. In this case, the hand controller 20 can control the grasping on the basis of the grasping force. When the point indicating the grasping state is located in the area denoted by R2, the state estimator 21 determines that the contact areas of the fingers 45A and 45B are appropriate. The area denoted by R2 may be an area expressed by a following expression (1). [Math. 1]

$$(A + B) > La \quad \& \quad \left|\frac{A-B}{A+B}\right| < Lv \quad (1)$$

A reason why a division by (A + B) is performed is that because, as (A + B) increases, the sensor output values decrease due to the deviation of the central axis from the sensors, the determination can be stably made through normalization.

Areas of (A + B) > La and |A - B|/(A + B) ≥ Lv (i.e., (A - B)/(A + B) ≥ +Lv and (A - B)/(A + B) ≤ -Lv), on the other hand, are denoted by R3. When the point indicating the grasping state is located in R3, the fingers 45A and 45B move in a closing direction with one of the fingers 45A and 45B in contact with the object 8 to be grasped. In this case, the hand controller 20 cannot control the grasping on the basis of the grasping force. When the point indicating the grasping state is located in one of the areas denoted by R3, the state estimator 21 determines that the contact areas of the fingers 45A and 45B are not appropriate. In general, the sensor outputs (A and B) can be expressed as linear functions of the rotation angle θ or handled as linear functions by performing linear conversion on relationships with the rotation angle θ. At this time, a value of |A - B|/(A + B) converges when the rotation angle θ becomes closer to infinity. Lv, therefore, may be determined on the basis of the convergence value. More specifically, for example, Lv may be a value obtained by adding any integer, decimal, or the like to the convergence value. La may be any value determined in accordance weight or softness of the object to be grasped, design of the hand 4, or the like. The sensor outputs might include a noise component, and in this case, La may be a value obtained by adding the noise component (e.g., an offset value of each sensor) to the above value. Lv or La may be stored in the storage unit as with the above-described conversion table.

An area between R1 and R2 or an area between R2 and R3 is denoted by R4. The area denoted by R4 will also be referred to as a transient state area. A transient state corresponds to a state in which the switch 29 switches between an open state and a closed state. In the transient state area, the hand controller 20 may output, as in a case where chattering of a digital sensor that outputs a binary value of H or L is eliminated, for example, the same results of determinations obtained for a specified number of consecutive times as a result of a determination whether the point indicating the grasping state is located in the area R2 or R3. When the point indicating the grasping state is located in the area denoted by R4, the state estimator 21 may determine that the contact areas of the fingers 45A and 45B are not appropriate, or may determine whether the point indicating the grasping state is located in the area R2 or R3 and then determine whether the contact areas are appropriate.

When the point indicating the grasping state is located in the area denoted by R2, the state estimator 21 may output, to the switch 29, a signal for closing the switch 29 in such a way as to control the grasping on the basis of the grasping force. When the point indicating the grasping state is located in the area denoted by R1 or R3, the state estimator 21 may output, to the switch 29, a signal for opening the switch 29 in such a way as to control the grasping without considering the grasping force. In doing so, the hand controller 20 can determine, on the basis of the grasping state, whether to use the grasping force for the control of grasping. As a result, the grasping can be stably controlled at a start of the control of the grasping force. When the point indicating the grasping state is located in the area denoted by R4, the state estimator 21 may appropriately determine and output an open/close signal for the switch 29.

When the point indicating the grasping state is located in the area denoted by R2, the hand 4 can stably grasp the object 8 to be grasped. In other words, a grasp and contact state of the hand 4 is a state in which an operation can be performed on the object 8 to be grasped. The state in which an operation can be performed on the object 8 to be grasped will also be referred to as an operable state. The state estimator 21 may determine whether the grasp and contact state of the hand 4 is the operable state on the basis of a result of the determination whether the contact areas are appropriate.

When the point indicating the grasping state is located in the area denoted by R2 in the graph of FIG. 5, the state estimator 21 determines that the contact areas of the fingers 45A and 45B are appropriate in relation to the object 8 to be grasped. When the point indicating the grasping state is located in one of the areas denoted by R3 in the graph of FIG. 5, on the other hand, the state estimator 21 determines that the contact areas of the fingers 45A and 45B are not appropriate in relation to the object 8 to be grasped. In other words, the state estimator 21 may determine whether the contact areas are appropriate on the basis of which of |A - B|/(A + B) and Lv is larger in expression (1).

When the point indicating the grasping state is located in the area denoted by R1 in the graph of FIG. 5, the fingers 45A and 45B are not sufficiently close to the object 8 to be grasped and contact or move away from the object 8 to be grasped. That is, the contact states of the fingers 45A and 45B in relation to the object 8 to be grasped are unstable. In this case, the state estimator 21 may determine that the contact force acting on the fingers 45A and 45B are not appropriate. When the point indicating the grasping state is located outside the area denoted by R1 in the graph of FIG. 5, on the other hand, the fingers 45A and 45B are sufficiently close to the object 8 to be grasped, in contact with the object 8 to be grasped, and do not move away from the object 8 to be grasped. That is, the contact states of the fingers 45A and 45B in relation to the object 8 to be grasped are stable. In this case, the state estimator 21 may determine that the contact force acting on the fingers 45A and 45B is appropriate. In other words, the state estimator 21 may determine whether the contact force is appropriate on the basis of which of (A + B) and La is larger in expression (1).

The determination whether the contact areas or the contact force is appropriate based on the graph of FIG. 5 can be regarded as a determination based on a relationship between the force information (A) regarding the first contact force sensor 43A and the force information (B) regarding the second contact force sensor 43B. That is, the hand controller 20 may determine, with the state estimator 21, whether the contact areas or the contact force is appropriate on the basis of a relationship between a plurality of pieces of force information.

After the point indicating the grasping state moves out of the area denoted by R1, the state estimator 21 may determine whether the point indicating the grasping state is located inside or outside the area denoted by R2. More specifically, the state estimator 21 may determine whether the contact force of the fingers 45A and 45B is appropriate on the basis of a relationship between a plurality of pieces of force information and, after determining that the contact force is appropriate, determine whether the contact areas of the fingers 45A and 45B are appropriate on the basis of the relationship between the plurality of pieces of force information. That is, the hand controller 20 may determine, with the state estimator 21, whether the contact force acting on the fingers 45A and 45B is appropriate on the basis of a relationship between a plurality of pieces of force information. The hand controller 20 may determine, with the state estimator 21, whether the contact areas of the fingers 45A and 45B are appropriate or whether the grasp and contact state of the hand 4 is the operable state on the basis of a result of the determination whether the contact force acting on the fingers 45A and 45B is appropriate.

If determining that the grasp and contact state of the hand 4 is the operable state, the hand controller 20 may control the hand 4 in such a way as to maintain the state. If determining that the grasp and contact state of the hand 4 is not the operable state, the hand controller 20 may control the hand 4 in such a way as to change a way the hand 4 grasps the object 8 to be grasped. The hand controller 20 may change, as the way of grasping, a grasping position or a grasping attitude of the hand 4 for the object 8 to be grasped. The hand controller 20 may change a grasping approach of the fingers 45A and 45B for the object 8 to be grasped, instead. In order to change the grasping approach of the hand 4 for the object 8 to be grasped, the hand controller 20 may output information regarding the grasp and contact state of the hand 4 to the robot controller 10. The robot controller 10 may control the arm 3 of the robot 2 and the like on the basis of the information regarding the grasp and contact state of the hand 4 in such a way as to change the grasping approach of the hand 4 for the object 8 to be grasped.

If the grasp and contact state of the hand 4 is not the operable state, the hand controller 20 may estimate, with the state estimator 21, a reason why the grasp and contact state is not the operable state on the basis of a plurality of pieces of force information. The reason why the grasp and contact state is not the operable state can be, for example, positions at which the fingers 45A and 45B are grasping the object 8 to be grasped or an attitude in which the object 8 to be grasped is being grasped.

If determining that the grasp and contact state is not the operable state, the hand controller 20 may further estimate a reason why the grasp and contact state is not the operable state. The hand controller 20 may control the way of grasping on the basis of a result of the estimation. In the present embodiment, if the state estimator 21 determines that the contact areas are inappropriate, the state estimator 21 may further determine whether the contact positions are inappropriate and whether the contact angles are inappropriate. If the contact positions are inappropriate, the hand controller 20 may control the hand 4 in such a way as to change the position at which the hand 4 grasps the object 8 to be grasped. If the contact angles are inappropriate, the hand controller 20 may change the grasping approach of the fingers 45A and 45B for the object 8 to be grasped.

The determination as to the contact positions can be made, for example, on the basis of the force sensor 44. When Fx(t), Fy(t), and Fz(t) denote force acting in the directions of the X-axis, the Y-axis, and the Z-axis detected by the force sensor 44 and t denotes time elapsed, for example, an evaluation value Etra can be calculated from a following expression (2). When the evaluation value Etra exceeds a certain threshold, it can be determined that the contact positions are inappropriate, t = 0 indicates a time immediately before grasping.
[Math. 2]

$$E_{tra} = (F_x(t) - F_x(0))^2 + (F_y(t) - F_y(0))^2 + (F_z(t) - F_z(0))^2 \quad (2)$$

The determination as to the contact angles can be made, for example, on the basis of the force sensor 44. When Mx(t), My(t), and Mz(t) denote moments acting about the X-axis, the Y-axis, and the Z-axis detected by the force sensor 44 and t denotes time elapsed, for example, an evaluation value Mrot is calculated from a following expression (3). When this evaluation value Erot exceeds a certain threshold, it can be determined that the contact angles are inappropriate, t = 0 denotes a time immediately before grasping.
[Math. 3]

$$E_{rot} = (M_x(t) - M_x(0))^2 + \left(M_y(t) - M_y(0)\right)^2 + (M_z(t) - M_z(0))^2 \quad (3)$$

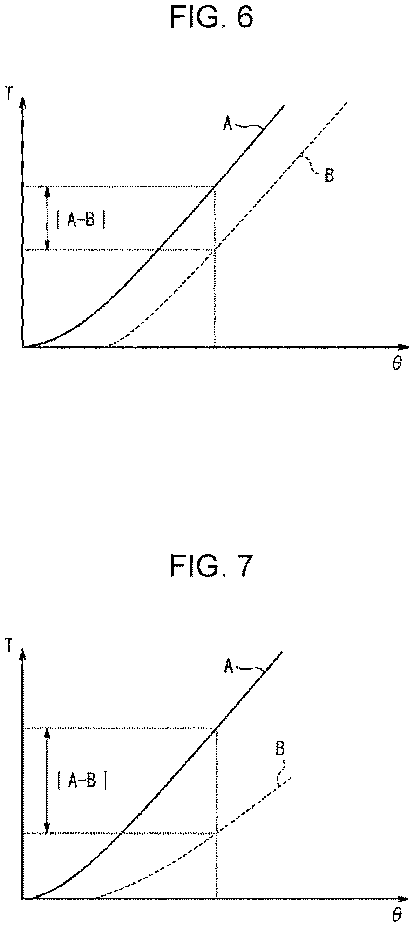

FIGs. 6 and 7 are graphs illustrating examples of a relationship between the outputs of the first and second contact sensors 43A and 43B and the rotation angle of the motor 41. Horizontal axes of the graphs represent the rotation angle of the motor 41. Vertical axes of the graphs represent the output of each contact force sensor 43. A distance between the fingers 45A and 45B decreases as the rotation angle of the motor 41 increases. As a result, as the rotation angle of the motor 41 increases, the outputs of the contact force sensors 43 increase.

The graph of FIG. 6 indicates the outputs at a time when the first contact force sensor 43A comes into contact with the object 8 to be grasped earlier than the second contact force sensor 43B does. When the outputs of the contact force sensors 43 change as illustrated in FIG. 6, the point indicating the grasping state in FIG. 5 moves along a dash-dot curve and enters the area denoted by R2. In this case, the hand controller 20 can start to control the grasping on the basis of the grasping force.

The graph of FIG. 7 indicates the outputs at a time when the second contact force sensor 43B comes into contact with the object 8 to be grasped earlier than the first contact force sensor 43A does and the second contact force sensor 43B is in contact with the object 8 to be grasped at a position deviating from the center of the object 8 to be grasped. When the outputs of the contact force sensors 43 change as indicated by FIG. 7, the point indicating the grasping state in FIG. 5 might move along a dash-dot-dot line and not enter the area denoted by R2. In this case, the hand controller 20 cannot start the control of grasping on the basis of the grasping force.

As described above, by plotting points indicating a combination of the output of the first contact force sensor 43A and an output of the second contact force sensor 43B on a two-dimensional plane, the state estimator 21 can determine, on the basis of positions at which the points have been plotted, whether to control the grasping on the basis of the grasping force or without considering the grasping force.

In the present embodiment, the robot controller 10 or the hand controller 20 can determine, by operating as described above on the basis of results of detection by the contact force sensors 43, whether to control the grasping on the basis of the grasping force or without considering the grasping force. As a result, stability of grasping can be enhanced.

More specifically, when the grasping force is constantly fed back and the object to be grasped comes into contact with one of the fingers as illustrated in FIG. 4B, for example, unstable outputs might be fed back since the outputs of the first contact force sensor and the second contact force sensor become unstable. According to the present application, on the other hand, the stability of grasping can be enhanced in the present embodiment since the robot controller 10 or the hand controller 20 can feed back the grasping force after determining, on the basis of the relationship between the outputs of the plurality of contact force sensors 43, that a stable grasping state has been established. In other words, control stability at a start of the control of the grasping force can be secured since the grasping force is not fed back until the robot controller 10 or the hand controller 20 determine that the grasping state is appropriate.

<Example of Flowchart>

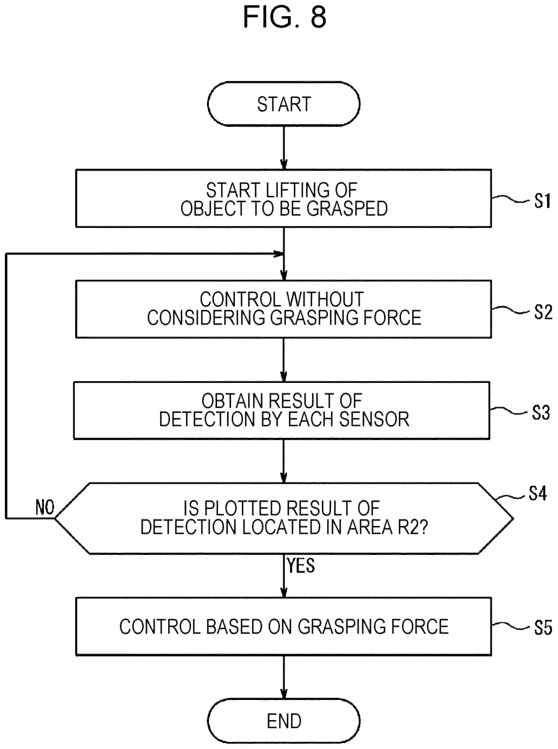

The robot controller 10 or the hand controller 20 may perform a method for controlling a robot including a procedure of a flowchart of FIG. 8. The method for controlling a robot may be implemented as a program for controlling a robot executed by a processor included in the robot controller 10 or the hand controller 20. The program for controlling a robot may be stored in a non-transitory computer-readable medium.

The robot controller 10 starts lifting of the object 8 to be grasped (step S1). More specifically, the robot controller 10 moves the hand 4 to the object 8 to be grasped by controlling the arm 3 such that the hand 4 can grasp the object 8 to be grasped. The hand controller 20 controls the hand 4 without considering the grasping force such that the hand 4 grasps the object 8 to be grasped (step S2).

After the hand 4 starts to grasp the object 8 to be grasped, the hand controller 20 obtains results of detection by the first and second contact sensors 43A and 43B (step S3). The hand controller 20 determines whether the result of the detection of the contact force by each sensor plotted on the graph of FIG. 5 is located in the area denoted by R2 (step S4).

If the plotted result of the detection of the contact force is not located in the area denoted by R2 (step S4: NO), the hand controller 20 returns to step S2, in which the hand 4 is controlled without considering the grasping force. If the plotted result of the detection of the contact force is located in the area denoted by R2 (step S4: YES), the hand controller 20 controls the hand 4 on the basis of the grasping force (step S5). After performing step S5, the robot controller 10 and the hand controller 20 end the procedure of the flowchart of FIG. 8.

(Other Embodiments)

In the above-described embodiment, a configuration where the hand 4 includes the two fingers 45A and 45B has been described. The number of fingers is not limited to two, and may be three or more, instead. When the hand 4 includes three or more fingers, the hand controller 20 may determine whether contact areas of at least two of the fingers are appropriate on the basis of force information from sensors linked to the at least two fingers.

<When Three or More Fingers Are Provided>

The hand 4 may further include a third finger as well as the finger 45A (first finger) and the finger 45B (second finger). The third finger includes one or a plurality of third contact sensors. The hand controller 20 may also obtain, with the state estimator 21, force information indicating force acting on the third finger of the hand 4 from a sensor linked to the third finger and determine whether contact areas are appropriate. More specifically, the state estimator 21 may determine whether the contact areas are appropriate as described hereinafter.

When the hand 4 includes two fingers, an evaluation value E expressed by a following expression (4) is calculated in order to determine whether contact areas are appropriate. Expression (4) of the evaluation value E corresponds to a value on the vertical axis of the graph of FIG. 5.
[Math. 4]

$$E = \frac{|A-B|}{A+B} \quad (4)$$

The evaluation value E when the hand 4 includes three fingers, on the other hand, is expressed by a following expression (5). C denotes an output of the third contact sensor.
[Math. 5]

$$E = \frac{\left|\sqrt{(A-B)^2+(B-C)^2+(C-A)^2}\right|}{2(A+B+C)} \quad (5)$$

When the number of fingers further increases to four or more, too, the evaluation value E is expressed by a following expression (6).
[Math. 6]

$$E = \frac{\text{Absolute value of difference between sensor outputs of adjacent fingers}}{(\text{Number of sensors - 1}) \times \text{Sum of sensor outputs}} \quad (6)$$

The state estimator 21 may calculate the evaluation value E and, if the evaluation value E is smaller than a certain threshold (Lv in the example in FIG. 5), determine that the contact areas are appropriate.

<Status Output>

The state estimator 21 may generate a status output where the grasping state is defined as a discrete state and output the status output to an external controller. When the grasping state is defined as the discrete state, relationships between combinations of pieces of force information from the sensors and the grasping state are defined.

When determinations based on the plurality of pieces of force information regarding the hand 4 are sequentially made, time or an operation load taken to estimate the grasping state can increase as the number of pieces of force information used for the determinations increases. By defining the relationships between the combinations of the plurality of pieces of force information and the grasping state in advance, the state estimator 21 can easily estimate the grasping state. By discretely managing or recording control items for performing a grasping operation, the hand 4 can omit arithmetic operations for control items that already satisfy conditions and reduce a control load of the hand controller 20.

The state estimator 21 may output, as shown in a following table 1, for example, a combination of a grasping determination output, a grasping force output, and a status output estimated on the basis of values input from the contact force sensors 43 and a grasping position input from the encoder 42 as control items for performing a grasping operation.

Table 1]

| Contact force sensor input | Grasping position input | Grasping determination output | Grasping force output | Status output |
|---|---|---|---|---|
| Satisfies condition | Within certain grasping position | Grasp and contact appropriate | Average output | Grasp and contact appropriate |
| Does not satisfy condition | Within certain grasping position | Grasp and contact inappropriate | Output zero | Grasp and contact inappropriate |
| Input not used | Outside certain grasping position | Determination not made | Output zero | Grasping position inappropriate |

The grasping determination output corresponds to a result of a determination whether contact of the hand 4 with the object 8 to be grasped is appropriate in order to determine whether to feed the grasping force back to the control of the hand 4. The grasping force output corresponds to the grasping force fed back to the control of the hand 4.

The status output corresponds to a result of a determination whether, as the grasping state of the hand 4, the contact of the hand 4 with the object 8 to be grasped is appropriate or whether the grasping position is appropriate. The status output can be regarded as corresponding to a result of a determination whether the contact areas of the fingers 45A and 45B in contact with the object 8 to be grasped are appropriate.

A second row of Table 1 corresponds to a case where the sensor input satisfies a condition and the grasping position is within a certain grasping position. A case where the sensor output satisfies the condition corresponds to a case where the output A of the first contact force sensor 43A and the output B of the second contact force sensor 43B satisfy the above expression (1). In this case, the state estimator 21 outputs, as the grasping determination output, a result of a determination indicating that the contact of the hand 4 for grasping the object 8 to be grasped is appropriate. The state estimator 21 outputs, as the grasping force fed back to the control of the hand 4, an average of the output A of the first contact force sensor 43A and the output B of the second contact force sensor 43B. The state estimator 21 may output a signal for closing the switch 29 in order to feed back the grasping force. The state estimator 21 outputs, as the status output, a result of a determination indicating that contact of the hand 4 with the object 8 to be grasped is appropriate.

A third row of Table 1 corresponds to a case where the sensor input does not satisfy the condition and the grasping position is within the certain grasping position. A case where the sensor input does not satisfy the condition corresponds to a case where the output A of the first contact force sensor 43A and the output B of the second contact force sensor 43B do not satisfy the above expression (1). In this case, the state estimator 21 outputs, as the grasping determination output, a result of a determination indicating that the contact of the hand 4 with the object 8 to be grasped is not appropriate. The state estimator 21 outputs zero as the grasping force in order not to feed the grasping force back to the control of the hand 4. The state estimator 21 may output a signal for opening the switch 29 in order not to feed back the grasping force. The state estimator 21 outputs, as the status output, a result of a determination indicating that the contact of the hand 4 with the object 8 to be grasped is not appropriate.

A fourth row of Table 1 corresponds to a case where a determination is not made on the basis of the sensor input and the grasping position is outside the certain grasping position. In this case, the state estimator 21 does not determine, as the grasping determination output, whether the contact of the hand 4 for grasping the object 8 to be grasped is appropriate. The state estimator 21 outputs zero as the grasping force in order not to feed the grasping force back to the control the hand 4. The state estimator 21 may output a signal for opening the switch 29 in order not to feed back the grasping force, instead. The state estimator 21 outputs, as the status output, a result of a determination indicating that a position at which the hand 4 is grasping the object 8 to be grasped is not appropriate.

The state estimator 21 can easily estimate the grasp and contact state on the basis of a combination of a result of detection of the contact force and the grasping position by creating the relationships shown on Table 1 in advance.

Although the robot control systems 100 according to some embodiments have been described, embodiments of the present disclosure may include a mode where a method or a program for achieving a system or an apparatus or a storage medium (e.g., an optical disc, a magneto-optical disk, a CD-ROM, CD-R, a CD-RW, a magnetic tape, a hard disk, a memory card, etc.) storing the program is employed. The program may be stored in a non-transitory computer-readable medium.

A mode in which the program is provided is not limited to an application program such as an object code complied by a compiler or a program code executed by an interpreter, and may be a mode such as a program module incorporated into an operating system. The program may or may not be configured such that a CPU on a control substrate performs all processing. The program may be configured such that another processing unit provided for an expansion board or an expansion unit added to a board performs a part or the entirety thereof.

Although some embodiments of the present disclosure have been described on the basis of the drawings and the examples, noted that those skilled in the art can make various variations or alterations on the basis of the present disclosure. Note, therefore, that the scope of the present disclosure includes such variations and alterations. For example, functions included in various components can be rearranged without causing a logical contradiction. A plurality of components can be combined together or further divided.

In the present disclosure, the X-axis, the Y-axis, and the Z-axis are provided for convenience of description, and may be switched. The components in the present disclosure have been described using an orthogonal coordinate system defined by the X-axis, the Y-axis, and the Z-axis. Positional relationships between the components in the present disclosure are not limited to orthogonal relationships.

REFERENCE SIGNS

1 robot control system
2 robot (3: arm)
4 hand (41: motor, 42: encoder, 43 (43A, 43B): contact force sensors, 44: force torque sensor, 45A, 45B: finger)
8 object to be grasped
10 robot controller
20 hand controller (21: state estimator, 22: converter, 24: position controller, 25 to 27: adders, 29: switch)
28 driver

**Claims**

1.  A control apparatus comprising:

    a hand controller that controls a hand capable of grasping an object to be grasped and including a first finger and a second finger,
    wherein the hand controller obtains, from at least one sensor linked to the first finger and the second finger, a plurality of pieces of force information indicating force acting on the first finger and the second finger from the object to be grasped, and
    wherein the hand controller determines, on a basis of a relationship between the plurality of pieces of force information, whether contact areas of the first finger and the second finger in contact with the object to be grasped are appropriate.

2.  The control apparatus according to claim 1,
    wherein the hand controller determines, on a basis of whether the contact areas are appropriate, whether a grasp and contact state of the hand in relation to the object to be grasped is an operable state, in which an operation can be performed on the object to be grasped.

3.  The control apparatus according to claim 1 or 2,
    wherein the hand controller determines whether the contact areas are appropriate on a basis of the plurality of pieces of force information regarding a plurality of contact force sensors provided for the first finger and the second finger.

4.  The control apparatus according to any of claims 1 to 3,
    wherein the hand controller determines whether the contact areas are appropriate on a basis of the plurality of pieces of force information regarding at least one force torque sensor provided for the hand.

**5.** The control apparatus according to any of claims 1 to 4,
wherein the hand controller determines whether the contact areas are appropriate on a basis of contact positions and contact angles relative to the object to be grasped in contact with the first finger and the second finger.

**6.** The control apparatus according to any of claims 1 to 5,

wherein the hand controller determines, on a basis of the relationship between the plurality of pieces of force information, whether contact force of the first finger and the second finger in contact with the object to be grasped is appropriate, and
wherein the hand controller determines, on a basis of whether the contact force is appropriate, whether a grasp and contact state of the hand in relation to the object to be grasped is an operable state, in which an operation can be performed on the object to be grasped.

**7.** The control apparatus according to claim 6,
wherein, if determining that the grasp and contact state is the operable state, the hand controller controls the hand in such a way as to maintain the grasp and contact state as the operable state.

**8.** The control apparatus according to claim 6 or 7,
wherein, if the grasp and contact state is not the operable state, the hand controller controls the hand in such a way as to change a way the hand grasps the object to be grasped.

**9.** The control apparatus according to any of claims 6 to 8,
wherein, if the grasp and contact state is not the operable state, the hand controller estimates, on a basis of the plurality of pieces of force information, whether a reason why the grasp and contact state is not the operable state is a position at which each finger is grasping the object to be grasped or a posture in which the object to be grasped is being grasped.

**10.** The control apparatus according to any of claims 1 to 9,
wherein the hand controller further obtains force information indicating force acting on a third finger included in the hand from a sensor linked to the third finger and determines whether the contact areas are appropriate.

**11.** A robot control system comprising:

the control apparatus according to any of claims 1 to 10; and
a robot including a hand.

**12.** A method for controlling a robot, the method comprising:

obtaining, from at least one sensor linked to a first finger and a second finger using a control apparatus that controls a hand capable of grasping an object to be grasped and including a first finger and a second finger, a plurality of pieces of force information indicating force acting on the first finger and the second finger from the object to be grasped; and
determining, on a basis of a relationship between the plurality of pieces of force information using the control apparatus, whether contact areas of the first finger and the second finger in contact with the object to be grasped are appropriate.

# FIG. 1

FIG. 2

EP 4 442 411 A1

# FIG. 3

## FIG. 4A

## FIG. 4B

# FIG. 4C

# FIG. 5

## FIG. 6

## FIG. 7

# FIG. 8

```
            ┌─────────────┐
            │    START    │
            └─────────────┘
                   │
                   ▼
    ┌──────────────────────────────┐
    │       START LIFTING OF       │ ～ S1
    │     OBJECT TO BE GRASPED     │
    └──────────────────────────────┘
                   │
                   ▼
    ┌──────────────────────────────┐
    │        CONTROL WITHOUT       │ ～ S2
    │  CONSIDERING GRASPING FORCE  │
    └──────────────────────────────┘
                   │
                   ▼
    ┌──────────────────────────────┐
    │       OBTAIN RESULT OF       │ ～ S3
    │   DETECTION BY EACH SENSOR   │
    └──────────────────────────────┘
                   │
                   ▼
 NO ╱────────────────────────────────╲ ～ S4
◄───┤     IS PLOTTED RESULT OF        │
    ╲  DETECTION LOCATED IN AREA R2?  ╱
     ╲──────────────────────────────╱
                   │ YES
                   ▼
    ┌──────────────────────────────┐
    │  CONTROL BASED ON GRASPING FORCE  │ ～ S5
    └──────────────────────────────┘
                   │
                   ▼
            ┌─────────────┐
            │     END     │
            └─────────────┘
```

## INTERNATIONAL SEARCH REPORT

International application No.

**PCT/JP2022/044048**

### A. CLASSIFICATION OF SUBJECT MATTER

***B25J 13/08***(2006.01)i; ***B25J 15/08***(2006.01)i
FI:  B25J13/08 Z; B25J15/08 W

According to International Patent Classification (IPC) or to both national classification and IPC

### B. FIELDS SEARCHED

Minimum documentation searched (classification system followed by classification symbols)

B25J13/08; B25J15/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/212189 A1 (THK CO., LTD.) 22 November 2018 (2018-11-22) paragraphs [0026]-[0033], [0038]-[0096], fig. 1-20 | 1-3, 5-8, 10-12 |
| Y | | 4, 9 |
| Y | JP 2011-224695 A (TOYOTA MOTOR CORP.) 10 November 2011 (2011-11-10) paragraphs [0038]-[0051], fig. 1-2 | 4, 9 |
| A | JP 2012-011531 A (YASKAWA ELECTRIC CORP.) 19 January 2012 (2012-01-19) entire text, all drawings | 1-12 |
| A | JP 2015-085455 A (SEIKO EPSON CORP.) 07 May 2015 (2015-05-07) entire text, all drawings | 1-12 |
| A | US 2012/0239195 A1 (SUMMER, Matthew D.) 20 September 2012 (2012-09-20) entire text, all drawings | 1-12 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **16 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/044048**

| Patent document cited in search report | | | Publication date (day/month/year) | Patent family member(s) | | | Publication date (day/month/year) |
|---|---|---|---|---|---|---|---|
| WO | 2018/212189 | A1 | 22 November 2018 | (Family: none) | | | |
| JP | 2011-224695 | A | 10 November 2011 | (Family: none) | | | |
| JP | 2012-011531 | A | 19 January 2012 | US | 2012/0004774 | A1 | |
| | | | | entire text, all drawings | | | |
| | | | | EP | 2460628 | A2 | |
| | | | | CN | 102310409 | A | |
| JP | 2015-085455 | A | 07 May 2015 | US | 2015/0120058 | A1 | |
| | | | | entire text, all drawings | | | |
| | | | | EP | 2868443 | A2 | |
| | | | | CN | 104589306 | A | |
| US | 2012/0239195 | A1 | 20 September 2012 | WO | 2012/125307 | A1 | |
| | | | | EP | 2686144 | A1 | |
| | | | | CA | 2824588 | A1 | |
| | | | | KR | 10-2013-0108674 | A | |
| | | | | CN | 103442859 | A | |

Form PCT/ISA/210 (patent family annex) (January 2015)

**EP 4 442 411 A1**

**REFERENCES CITED IN THE DESCRIPTION**

**Patent documents cited in the description**

- JP 2021193651 A
- JP 2003245883 A